# EUROPEAN PATENT SPECIFICATION

(11) **EP 0 514 087 B1**
(45) Date of publication and mention of the grant of the patent: **25.11.1998**
(21) Application number: 92304145.3
(22) Date of filing: 08.05.1992
(51) Int. Cl.: C08L 71/12, C08L 23/16

(54) **Polyphenylene ether-EPDM compositions**
Polyphenylenether-EPDM Zusammensetzungen
Compositions de polyéther de phénylène et EPDM

(30) Priority: 13.05.1991 US 698768
(43) Date of publication of application: 19.11.1992
(73) Proprietor: GENERAL ELECTRIC COMPANY, Schenectady, NY 12345 (US)
(72) Inventor: Laughner, Michael Paul, Clifton Park, New York 12065 (US); Scobbo, James Joseph, Jr., Guilderland, New York 12084 (US); Dekkers, Marinus Emmanual Johannes, Schenectady, New York 12309 (US)
(74) Representative: Szary, Anne Catherine, Dr.

(56) References cited:
- EP-A- 0 264 623
- EP-A- 0 306 774
- EP-A- 0 401 690
- US-A- 4 816 515

## Description

This invention relates to compositions of polyphenylene ether and functionalized olefinic compounds. and more particularly to such compositions prepared from carboxylic acid or amine functionalized polyphenylene ether.

Polyphenylene ethers are a well-known class of polymers characterized by a unique combination of chemical, physical and electrical properties over a temperature range of more than 350°C extending from a brittle point of about -170°C to a heat distortion temperature of 190°C. This combination of properties renders them suitable for use as engineering thermoplastics in a broad range of applications which are well known in the art and are disclosed in numerous patents and other publications.

It would be expected that the addition of olefinic polymers to polyphenylene ethers would result in improvements in both their mechanical and impact properties. However, the resins are to a large-extent incompatible. Furthermore, the polyphenylene ethers and the olefinic polymers generally exhibit viscosities that are different to such an extent that dispersion of more than a few parts of polyolefin in a blend without delamination occurring becomes difficult.

U.S. patent 5,068,286 discloses compositions comprising copolymers prepared by a reaction of a polyphenylene ether containing epoxy triazine groups with at least one aliphatic olefin polymer containing highly nucleophilic substituents. These copolymers exhibit good physical properties when blended with conventional impact modifiers for polyphenylene ethers.

US-A-4816515 discloses compositions with enhanced impact strength, solvent and thermal aging resistance prepared by interpolymerizing polyphenylene ether resins functionalized with acids or anhydrides, e.g. fumaric acid, and rubbers, e.g. EPDM rubbers, grafted with glycidyl acrylates or methacrylates.

EP-A-0306774 discloses thermoplastic compositions comprising polyphenylene ethers and polyesters, impact-modified by glycidyl (meth)acrylate grafted EPDM and compatibilized by an aromatic polycarbonate exhibit high impact strength alone and when combined with other impact modifiers. Their shear sensitive viscosity properties makes them uniquely suitable for extrusion and blow molding applications.

EP-A-0264623 discloses curable compositions comprising a polyphenylene ether resin free of substitutents which inhibit free radicals combined with liquid polymerizable monomers, such as styrene, and the vinyl monomers cured with an optional catalyst to produce interpolymers more rapidly than in the prior art. Before curing, the compositions can be combined with flame retardants, reinforcing fillers and/or impact modifiers.

EP-A-0401690 discloses a polyphenylene ether composition having improved melt flow comprising at least two polyphenylene ether resins, one having an intrinsic viscosity of at least about 0.38 dl/g. and another having an intrinsic viscosity of no greater than about 0.33 dl/g.

The present invention provides a compound exhibiting no delamination and improved mechanical properties made by a method of dispersing an electrophilic olefinic impact modifier in a polyphenylene ether continuous phase.

The present invention provides a composition prepared by (I) preblending (A) an acyl group- or electrophilic group-functionalized polyphenylene ether having an intrinsic viscosity greater than 0.35 dl./g. measured in chloroform at 25°C; and (B) an unfunctionalized polyphenylene ether having an intrinsic viscosity of 0.15 to 0.35 dl./g. measured in chloroform at 25°C; (II) blending the resulting preblend with (C) an aliphatic olefin polymer functionalized by an electrophilic group or an acyl group, and (III) blending the product thus formed with (D) a curing agent.

Both the polyphenylene ether and the impact modifier independently are functionalized with an electrophilic monomer, such as glycidyl methacrylate (GMA), or with at least one carboxylic acid, carboxylic acid derivative or amine functional group. Such groups may be introduced by reaction with such compounds as trimellitic anhydride acid chloride or a functionalizing compound containing one or more carbon-carbon double and/or triple bonds in combination with various functional groups including amino, carboxylic acid and carboxylic acid derivative groups. Illustrative compounds of this type are maleic acid, fumaric acid, maleic anhydride, maleimides such as N-phenylmaleimide and 1,4-phenylene-bis-methylene-α,α'-bismaleimide, maleic hydrazide, methylnadic anhydride, fatty oils (e.g., soybean oil, tung oil, linseed oil, sesame oil), unsaturated carboxylic acids such as acrylic acid, crotonic acid, methacrylic acid and oleic acid, unsaturated alcohols such as allyl alcohol and crotyl alcohol and unsaturated amines such as allylamine. The preferred compounds are maleic anhydride, and trimellitic anhydride acid chloride. The reaction may be a capping or a grafting reaction. The amine functionality may be introduced, for example, by grafting with allylamine. The functionality of the polyphenylene ether must react with the functionality of the impact modifier. For example the polyphenylene ether may contain a carboxy functionality when the impact modifier contains an electrophilic functionality, such as GMA, or the polyphenylene ether may contain an electrophilic functionality, such as GMA, when the impact modifier contains the carboxy functionality.

The polyphenylene ethers used in the present invention comprise a plurality of structural units having the formula

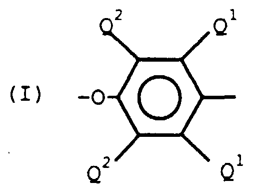

In each of the units independently, each Q¹ is independently halogen, primary or secondary lower alkyl (i.e., alkyl containing up to 7 carbon atoms), phenyl, haloalkyl, aminoalkyl, hydrocarbonoxy or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each Q¹ is alkyl or phenyl, especially C₁₋₄ alkyl and each Q² is hydrogen. Suitable polyphenylene ethers are disclosed in a large number of patents.

Both homopolymer and copolymer polyphenylene ethers are included. Suitable homopolymers are those containing 2,6-dimethyl-1,4-phenylene ether units. Suitable copolymers include random copolymers containing such units in combination with (for example) 2,3,6-trimethyl-1,4-phenylene ether units.

Also included are polyphenylene ethers containing moieties which modify properties such as molecular weight, melt viscosity and/or impact strength. Such polymers may be prepared by grafting onto the polyphenylene ether such vinyl monomers as acrylonitrile and vinylaromatic compounds (e.g., styrene), or such polymers as polystyrenes and elastomers. Other suitable polymers are the coupled polyphenylene ethers in which the coupling agent is reacted with the hydroxy groups of two polyphenylene ether chains to produce a higher molecular weight polymer containing the reaction product of the hydroxy groups and the coupling agent, provided a substantial proportion of free hydroxy groups remain present. Illustrative coupling agents are low molecular weight polycarbonates, quinones and heterocycles.

The polyphenylene ether generally has a number average molecular weight within the range of about 3,000 to 40,000 and a weight average molecular weight within the range of 20,000-80,000 as determined by gel permeation chromatography.

The polyphenylene ethers are typically prepared by the oxidative coupling of at least one corresponding monohydroxyaromatic compound. Particularly useful and readily available monohydroxyaromatic compounds are 2,6-xylenol (wherein each Q¹ is methyl and each Q² is hydrogen), whereupon the polymer may be characterized as a poly(2,6-dimethyl -1,4-phenylene ether) and 2,3,6-trimethylphenol (wherein each Q¹ and one Q² is methyl and the other Q² is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S. Patents 3,306,874, 3,306,875, 3,914,266 and 4,028,341. They are usually combinations of cuprous or cupric ions, halide (i.e., chloride, bromide or iodide) ions and at least one amine.

Catalyst systems containing manganese compounds constitute a second preferred class. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, hydroxyoximes (monomeric and polymeric), o-hydroxyaryl oximes and β-diketones. Also useful are known cobalt-containing catalyst systems. Suitable manganese and cobalt-containing catalyst systems for polyphenylene ether preparation are known in the art by reason of disclosure in numerous patents and publications.

Particularly useful polyphenylene ethers for the purposes of this invention are those which comprise molecules having at least one of the end groups of the formulas 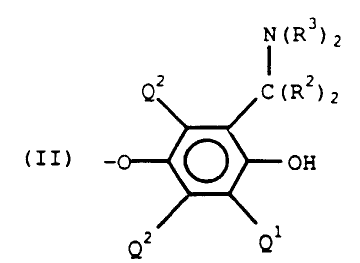 and 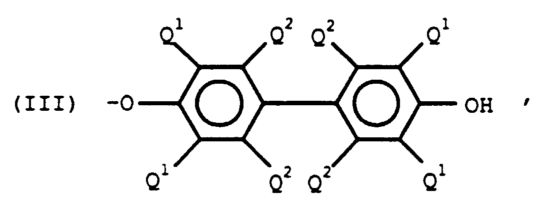 wherein Q¹ and Q² are as previously defined; each R² is independently hydrogen or alkyl with the proviso that the total number of carbon atoms in both R² radicals is 6 or less; and each R³ is independently hydrogen or a C₁₋₆ primary alkyl radical. Preferably, each R² is hydrogen and each R³ is alkyl, especially methyl or n-butyl.

Polymers containing the aminoalkyl-substituted end groups of formula II may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the hydrogen atoms on one or more Q¹ radicals. The principal site of reaction is the Q¹ radical adjacent to the hydroxy group on the terminal unit of the polymer chain. During further processing and/or blending, the aminoalkyl-substituted end groups may undergo various reactions, probably involving a quinone methide-type intermediate of the formula 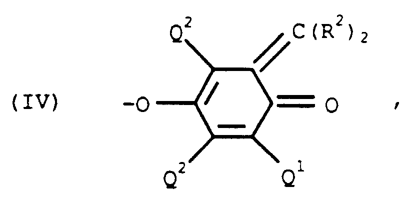 with numerous beneficial effects often including an increase in impact strength and compatibilization with other blend components. Reference is made to U.S. Patents 4,054,553, 4,092,294, 4,477,649, 4,477,651 and 4,517,341, the disclosures of which are incorporated by reference herein.

Polymers with 4-hydroxybiphenyl end groups of formula VI are typically obtained from reaction mixtures in which a by-product diphenoquinone of the formula 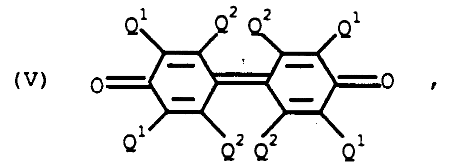 is present, especially in a copper-halide-secondary or tertiary amine system. In this regard, the disclosure of U.S. Patent 4,477,649 is again pertinent as are those of U.S. Patent 4,234,706 and 4,482,697, which are also incorporated by reference herein. In mixtures of this type, the diphenoquinone is ultimately incorporated into the polymer in substantial proportions, largely as an end group.

In many polyphenylene ethers obtained under the above-described conditions, a substantial proportion of the polymer molecules, typically constituting as much as about 90% by weight of the polymer, contain end groups having one or frequently both of formulas II and III. It should be understood, however, that other end groups may be present and that the invention in its broadest sense may not be dependent on the molecular structures of the polyphenylene ether end groups, provided a substantial proportion of free hydroxy groups is present.

The trimellitic anhydride acid chloride (TAAC) capped polyphenylene ethers used in the present invention may be prepared in a manner similar to that disclosed in U.S. Patents 4,642,358 and 4,600,741 incorporated herein by reference. A polyphenylene ether as described above may be reacted in the presence of heat and solvent with trimellitic anhydride acid chloride of the formula 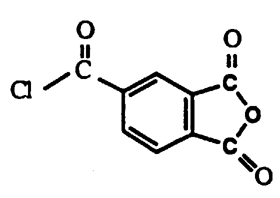 to provide a polyphenylene ether-TAAC of the formula 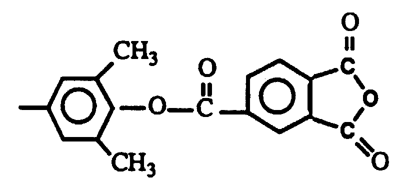 which may be appropriately purified as by precipitation in methanol or acetone.

Of course it is contemplated that the compatibilization agent can be generalized to encompass a number of other effective agents which would act similarly to the preferred polyphenylene ether-TAAC agents discussed herein above.

For example, the portion of the compatibilizing molecule associated or bonded to the polyphenylene ether resin chain can be generalized as an acyl-functional group depicted by the formula VI 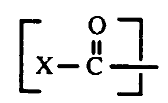 where x is F, Cl, Br, I, OH, and 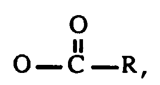 where R is H or an aliphatic or aromatic radical having less that about 10 carbon atoms.

Examples of suitable capping materials for the polyphenylene ether other than TAAC include but are not limited to chloroethanoylsuccinic anhydride, 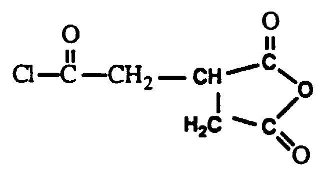 chloroformylsuccinic anhydride, 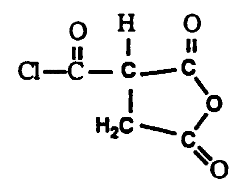 and trimellitic acetic acid anhydride 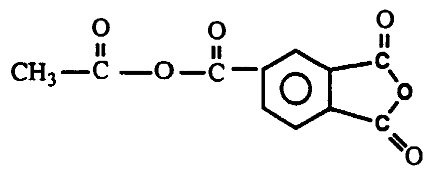 The polyphenylene ethers used in the present invention may also be functionalized with an electrophilic compound such as glycidyl methacrylate, further described herein below.

The low intrinsic viscosity polyphenylene ether used in the present invention generally is poly(2,6-dimethyl-1,4-phenylene ether). A suitable IV range is from about 0.15 to about 0.35, and preferrably 0.25. The number average molecular weight as determined by gel permeation chromatography preferably ranges from about 20,000 to about 40,000.

Olefinic impact modifiers which can be used in the practice of the present invention can be made by a well known procedure, as fully described in patents such as, U.S. Patents Number 2,933,480, 3,093,621, 3,211,709, 3,646,168, 3,790,519, 3,884,993, 3,894,999, 4,059,654 which are incorporated herein by reference. A typical procedure for making the olefinic impact modifiers is by reacting varying amounts of ethylene, C₃₋₁₀ mono-olefin, and a non-conjugated polyene monomer containing a plurality of carbon-carbon double bonds in the presence of a catalyst and a solvent medium. Suitable C₃₋₁₀ mono-olefins include but are not limited to propylene, 1-butene, 2-butene, 1-pentene, 2-pentene, 1-hexene, 2-hexene, 3-hexene. Suitable polyene monomers include, open chained poly unsaturated hydrocarbons containing 4-20 carbon atoms, such as, 1,4-hexadiene, monocyclic polyenes and polycyclic polyenes. The polyunsaturated bridged ring hydrocarbons or halogenated bridged ring hydrocarbons are preferred. Examples of such bridged ring hydrocarbons include the polyunsaturated derivatives of bicyclo(2,2,1) heptane, wherein at least one double bond is present in one of the bridged rings, such as dicyclopentadiene, bicyclo(2,2,1)hepta-2,5-diene, the alkylidene norbornenes, and especially the 5-alkylidene norbornenes wherein the alkylidene group contains 1-20 carbon atoms and preferably 1-8 carbon atoms, the alkenyl norbornenes, and especially the 5-alkylidene-2-norbornenes, wherein the alkenyl group contains about 3-20 carbon atoms and preferably 3-10 carbon atoms. Other bridged ring hydrocarbons include polyunsaturated derivatives of bicyclo(2,2,2)octane as represented by bicyclo(3,2,1)octane polyunsaturated derivatives of bicyclo(3,3,1)nonane and polyunsaturated derivatives of bicyclo(3,2,2)nonane.

Specific examples of preferred bridged ring compounds include 5-méthylidene-2-norbornene, 5-ethylidene-2-norbornene, 5-n-propylidene-2-norbornene, 5-isobutylidene-2-norbornene, 5-n-butylidene-2-norbornene, 5-isobutylidene-2-norbornene, dicyclopentadienes, the methyl butenyl norbonenes such as 5-(2-methyl-2-butenyl)-2-norbornene or 5-(3-methyl-2-butenyl)-2-norbornene, and 5-(3-dimethyl-4-hexenyl)-2-norbornene. The elastomer prepared form 5-ethylidene-2-norbornene is preferred. Suitable olefinic impact modifiers include ethylene propylene diene monomer.

The EPDM backbone rubber may contain chemically bound molar ratios of ethylene to propylene or other 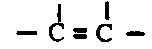 mono-olefins, varying between 95 to 5, and 5 to 95 ethylene to propylene, and preferably about 83 parts by weight ethylene and about 12 parts by weight propylene. The polyene or substituted polyene may be chemically bound therein in an amount of 9.1 to 10 mol percent, and preferably 0.3 to 1 mol percent. The level of unsaturation in the backbone rubber may range from about 0 to 20 double bonds, per 1,000 carbon atoms in the polymer chain.

The polymerization reaction for preparation of the EPDM is carried out in the presence of a catalyst in a solvent medium. The polymerization solvent may be any suitable inert organic solvent that is liquid under reaction conditions. Examples of satisfactory hydrocarbon solvents are straight-chain paraffins having from 5-8 carbon atoms with best results often being secured by the use of hexane, aromatic hydrocarbons and preferably an aromatic hydrocarbon having a single benzene nucleus, such as benzene, toluene and the like and saturated cyclic hydrocarbons having boiling point ranges approximately those of the straight chain paraffin hydrocarbons and aromatic hydrocarbons described above and preferably saturated cyclic hydrocarbons having 5-6 carbon atoms in the ring nucleus. The solvent selected can be a mixture of one or more of the foregoing hydrocarbons and preferably a mixture of aliphatic and naphthenic hydrocarbons having approximately the same boiling range as normal hexane. It is desirable that the solvent be dry and free of substances that will interfere with the Ziegler-type catalyst used in the polymerization reaction.

The interpolymerization is carried out in the presence of a Ziegler catalyst of the type well known to the prior art. Such Ziegler-type catalysts are disclosed in a large number of patents, such as U.S. Patents no. 2,933,480, No. 3,093,620, No. 3,093,621, No. 3,211,709 and No. 3,113,115. Examples of Ziegler catalysts include metal organic coordination catalysts prepared by contacting a compound of a heavy metal of the group IV-a, V-a, VI-a and VII-a of the Mendeleev periodic system of elements, such as titanium, vanadium and chromium halides with an organometallic compound of a metal of groups I, II or II of the Mendeleev periodic system which contains at least one carbon-metal bond, such as trialkyl aluminum and alkyl aluminum halides in which the alkyl groups contain from 1-20 and preferably 1-4 carbon atoms.

The preferred Ziegler catalyst is prepared from a vanadium compound and an alkyl aluminum halide. Examples of suitable vanadium compounds include vanadium trichloride, vanadium tetrachloride, vanadium oxychloride, vanadium acetyl acetonate, etc. Activators which are especially preferred include alkyl aluminum chlorides of U.S. Patent No. 3,113,115, having the general formula R-AlCl and R₂AlCl and the corresponding sesquichlorides of the general formula R₃Al₂Cl₃ in which R is methyl, ethyl, propyl, butyl or isobutyl in the catalyst system, the aluminum to vanadium mol ratio of the aluminum and vanadium compounds may be within the range of 5:1 to 200:1 and preferably within the range of 15:1 to 60:1 with best results being secured in the ratio of 40 aluminum to 1 vanadium. These same ratios apply with respect to corresponding compounds of others of the heavy metals substituted for the vanadium compound and the organometailic compounds of groups I, II and III for the aluminum compounds. A catalyst prepared from alkyl aluminum sesquichloride, such as the methyl or ethyl aluminum sesquichloride and vanadium oxychloride is preferred in the ratio of 1 mole vanadium oxychloride, per 5 to 300 moles of aluminum and more preferably 15 to 60 moles of aluminum with 40 moles of aluminum per mole of vanadium yielding the best results.

The polymerization is preferably carried out on a continuous basis in a reaction vessel closed to the outside atmosphere which is provided with an agitator cooling means and conduit means for continuously supplying the ingredients of the reaction including monomer catalyst and accelerators and conduit means of continuously withdrawing solution containing elastomer, and the catalyst is killed by the addition of a catalyst deactivator.

It has been found that the EPDM rubber may be modified with an epoxy compound, such as glycidyl methacrylate. However, any epoxy compound included within the formula, 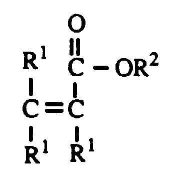 can be used where R² is an organic group having an epoxide functionality, and each R¹ is independently a monovalent radical selected from the class consisting of hydrogen, C₍₁₋₈₎ alkyl, a C₍₆₋₁₃₎ aromatic organic group, aralkyl, and alicyclic. Suitable epoxy functional graft monomers are glycidyl ethers of unsaturated alcohols, i.e., allyl glycidyl ether, methallyl glycidyl ether; glycidyl esters of unsaturated carboxylic acids; i,e., glycidyl 2-ethyl acrylate, glycidyl 2-propyl acrylate, glycidyl acrylate, glycidyl ethers of alkenylphenols, i.e., isopropenylphenyl glycidyl ethers; vinyl and allyl esters of epoxy carboxylic acids, vinyl esters of epoxidized oleic acid; and the like. Preferred as the graft monomer herein is glycidyl methacrylate (GMA). Modification of the EPDM rubber with the epoxy functional monomer is preferably achieved by premixing the epoxy monomer with a free radical initiator and thereafter blending the resulting mixture with the EPDM rubber. The resulting blend can be extruded at a temperature of about 100°C to about 350°C. In the grafting reaction, there can be used 0.1 to 20 parts of the epoxy compound and preferably 2 to 10 per 100 parts by weight of the EPDM rubber. The EPDM rubber may be also modified with a carboxylic acid, carboxylic acid derivative, or amine functional group, described herein above.

The polyphenylene ether continuous phase of the present invention may be prepared by preblending of the above described TAAC capped polyphenylene ether and a low intrinsic viscosity polyphenylene ether, wherein the IV is about 0.25. It is believed that the viscosity of the entire polyphenylene ether continuous phase is reduced, thereby increasing the ability to disperse the GMA substituted EPDM rubber in the continuous polyphenylene ether phase. The preblended polyphenylene ether continuous phase may be derived from about zero to about 50 percent by weight of the preblend of polyphenylene ether and about 50 to about 100 percent by weight of the preblend of LIV polyphenylene ether. The preblended low intrinsic viscosity polyphenylene ether-TAAC capped polyphenylene ether compound is then melt blended with the GMA-substituted EPDM rubber to form a blend with better physical surface appearances as well as improved mechanical properties.

Both melt blending operations may be performed in conventional melt blending apparatus of both the batch and continuous type. It is often preferably conducted continuously in an extruder, by reason of the excellent properties of extruded materials and the availability of extruders in commercial polymer processing facilities. Typical conditions include temperatures in the range of about 240-400°C. The proportion of TAAC employed is not critical and will depend on the degree of capping desired.

The composition comprising trimellitic acid anhydride capped polyphenylene ether, low viscosity polyphenylene ether, and an olefinic impact modifier, preferably EPDM grafted to GMA optionally may be cured. Suitable curing agents include cross-linking agents that react with residual unsaturation such as peroxides, sulphur and polysulphides, cross-linking agents that react with the residual epoxy groups such as organic diamines or polyamines, organic diacids or polyacids, organic diesters or polyesters, organic dianhydrides or polyanhydrides and other polyfunctional epoxide reactive compounds. More specific examples are hexamethylene diamine, hexamethylene diamine monocarbamic acid, benzophenone tetracarboxylic dianhydride, adipic acid and maleic acid or anhydride and their precursors.

In order that those skilled in the art may be better able to practice the present invention, the following examples are given as illustrations of the preparation of the composition of the present invention. It should be noted that the invention is not limited to the specific details embodied in the examples and further that all parts are by weight.

### Example 1

The EPDM rubber used was Epsyn 801 commercially available from Copolymer Rubber and Chemical Corp. which has approximately 83% ethylene content and 5.4 ENB ethylene norbornene unsaturation. The polyphenylene ether used was an endcapped polyphenylene ether with trimellitic anhydride acid chloride (TAAC), and a low intrinsic viscosity (LIV) polyphenylene ether IV=0.25.

The functionalized rubber was made by charging 1000 parts EPDM along with 60 parts glycidyl methacrylate (GMA) and 6 parts Lupersol 101 (2,5-Dimethyl-2,5-di(t-butylperoxy) hexane) in the extruder at 204°C (400°F). The EPDM, GMA, and Lupersol 101 were premixed and tumbled prior to the extrusion. The resulting strand was pelletized and dried at 80°C for 4 hours before using in subsequent extrusions. 30 parts of TAAC capped polyphenylene ether and 30 parts of LIV polyphenylene ether were passed through an extruder at 299°C (570°F), followed by extrusion with 40 parts of EPDM-GMA rubber at 266°C (510°F). The resultant material was subsequently passed through the extruder at 266°C (510°F) with 0.8 parts by weight of hexamethylene diamine monocarbamic acid commercially available from E.I. du Pont de Nemours & Co. (Inc.).

### Example 2 (comparative)

The procedure of Example 1 was repeated except that 30 parts of polyphenylene ether (IV=0.46) and 30 parts of TAAC capped polyphenylene ether were pre-extruded at 299°C (570°F) and then extruded at 266°C (510°F) with 40 parts of the GMA substituted EPDM.

### Example 3 (comparative)

The procedure of Example 1 was repeated except that 30 parts of polyphenylene ether (IV=0.46) and 30 parts of LIV polyphenylene ether were pre-extruded at 299°C (570°F) and then extruded at 266°C (510°F) with 40 parts of the GMA substituted EPDM.

### Example 4 (comparative)

The procedure of Example 1 was repeated except that the pre-extruded TAAC capped polyphenylene ether - LIV polyphenylene ether composition was extruded at 266°C (510°F) with 40 parts of unsubstituted EPDM.

### Example 5 (comparative)

The procedure of Example 1 was repeated except that 30 parts of TAAC capped polyphenylene ether were pre-extruded at 299°C (570°F) with 30 parts of polystyrene commercially available as Mobile 1800 Polystyrene.

### Example 6 (comparative)

The procedure of Example 1 was repeated except that the 30 parts of polyphenylene ether (IV=0.46) and 30 parts of TAAC capped polyphenylene ether and 40 parts GMA substituted EPDM were pre-extruded at 299°C (570°F) and then again passed through the extruder at 266°C (510°F) before extrusion at 266°C (510°F) with 0.8 parts of the hexamethylene diamine monocarbamic acid.

### Example 7 (comparative)

The procedure of Example 1 was repeated except that no hexamethylene diamine carbamate was used.

### Example 8

The procedure of Example 1 was repeated except that the 40 parts of polyphenylene ether-TAAC, 40 parts of LIV polphenylene ether (I.V.=0.25) , and 20 parts of the GMA substituted EPDM were used.

### Example 9

The procedure of Example 1 was repeated except that the 45 parts of polyphenylene ether-TAAC, 45 parts LIV polyphenylene ether (I.V.=.25), 10 parts of the GMA substituted EPDM, and 1 part of hexamethylene diamine monocarbamic acid were used.

Table I below shows a series of polyphenylene ether/EPDM blends of various compositions and processing conditions. All of the blends were subjected to three passes through the extruder with the exception of Example 7 which was not cured with the diamine.

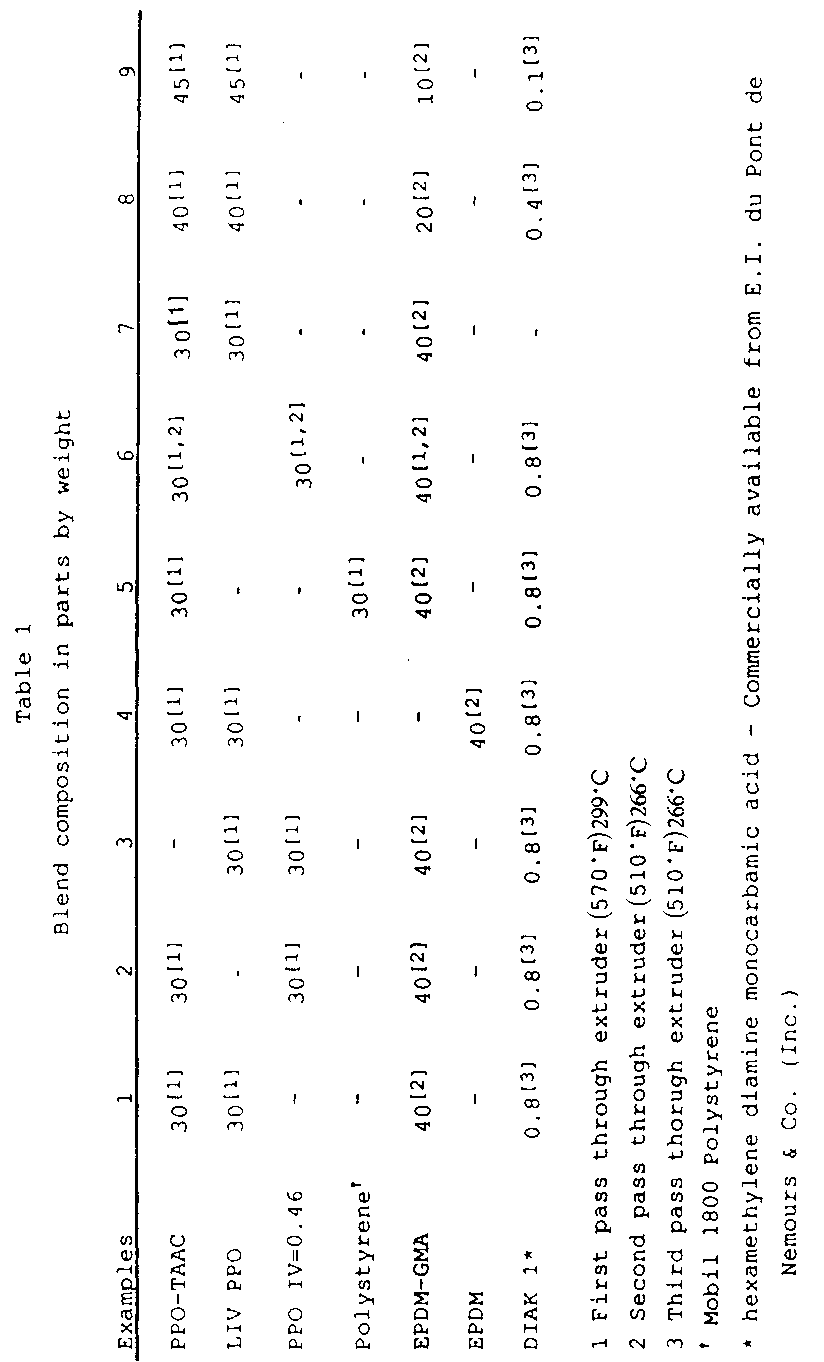

The compounds in Table I were then dried and injection molded into both large tensile and Izod Bars.

Tensile testing was performed on an Instron 1125 tensile testing machine. The notched Izod tests were performed on a TMI series 400 Isod impact test with a 0.9 kg (two pound) hammer according to ASTM D256, Method A. The properties of the polyphenylene ether/EPDM blends are listed below in Table II.

**Table II**

| Example | 1 | 2 | 3 | 4 | 5 | 6 | 7 | 8 | 9 |
|---|---|---|---|---|---|---|---|---|---|
| Tensile Modulus (PSI x 10³) MPa | (70) 483 | (75) 517 | (67) 462 | (78) 538 | (81) 559 | (73) 504 | (90) 621 | (134) 925 | (130) 897 |
| | | | | | | | | | |
| Max Strain % | 80 | 69 | 49 | 40 | 47 | 80 | 12 | 71 | 26 |
| | | | | | | | | | |
| Notched Izod (ft-lbs/in) J/m | (7.7) 410.4 | (9.6) 511.7 | (3.1) 165.2 | (13.6) 724.9 | (1.3) 69.3 | (9.0) 479.7 | (8.4) 447.7 | (8.2) 437.1 | (3.3) 175.9 |
| | | | | | | | | | |
| Visible Delamination | No | Yes | No | Yes | No | Yes | Yes | No | No |

Upon visual inspection of the fracture surface of both the notched Izod and tensile bars, it is obvious that Examples 2,4,6, and 7 all have some degree of delamination associated with them when compared to Examples 1,3, and 5. Example 7 also shows lamination.

Examples 1,3, and 5 show no lamination upon visual inspection. Example 1 demonstrates that if LIV polyphenylene ether and polyphenylene ether-TAAC are first precompounded, then EPDM-GMA is added in a subsequent step followed by the diamine curing agent, a blend with good mechanical properties and no lamination is produced. Both Examples 3 and 5 produce blends that also have no lamination but their mechanical properties are not as good as Example 1. In the case of Example 5, it appears that the polystyrene is effective in reducing the viscosity mismatch such that the blend contains no lamination, but the properties suffer severely, indicating that the low IV (lower molecular weight) polyphenylene either not only is effective in reducing the overall viscosity of the polyphenylene ether phase, but it is essential to maintain the mechanical properties.

Obviously, other modifications and variations of the present invention are possible in light of the above teachings. It is therefore to be understood that changes may be made in particular embodiments of the invention described which are within the full intended scope of the invention as defined by the claims. It is to be further understood that all patents mentioned above are to be incorporated herein by reference.

## Claims

1. A composition prepared by (I) preblending (A) an acyl group- or electrophilic group-functionalized polyphenylene ether having an intrinsic viscosity greater than 0.35 dl./g. measured in chloroform at 25°C; and (B) an unfunctionalized polyphenylene ether having an intrinsic viscosity of 0.15 to 0.35 dl./g. measured in chloroform at 25°C; (II) blending the resulting preblend with (C) an aliphatic olefin polymer functionalized by an electrophilic group or an acyl group, and (III) blending the product thus formed with (D) a curing agent.

2. A composition according to claim 1 wherein the polyphenylene ether is a poly(2,6-dimethyl-1,4-phenylene ether).

3. A composition according to claim 2 wherein component A is functionalized with an acyl group and component C with an electrophilic group.

4. A composition according to claim 3 wherein component C is a functionalized EPDM copolymer.

5. A composition according to claim 4 wherein the electrophilic group is an epoxy group.

6. A composition according to claim 5 wherein component C is a glycidyl methacrylate-grafted EPDM copolymer.

7. A composition according to claim 3 wherein component A is the reaction product of a polyphenylene ether and trimellitic anhydride acid chloride.

8. A composition according to claim 7 wherein component C is a glycidyl methacrylate-grafted EPDM copolymer.

9. A composition according to claim 8 wherein component D is employed in the amount of about 0.1 to 10.0 parts per 100 parts of resinous components.

10. A composition according to claim 9 wherein component D is hexamethylenediaminemonocarbamic acid.

## Patentansprüche

1. Zusammensetzung hergestellt dadurch, daß man (I) (A) einen mit einer Acylgruppe oder elektrophilen Gruppe funktionalisierten Polyphenylenether, der eine Grenzviskositätszahl größer als 0,35 dl./g., gemessen in Chloroform bei 25°C, hat; und (B) einen nicht funktionalisierten Polyphenylenether, der eine Grenzviskositätszahl von 0,15 bis 0,35 dl./g., gemessen in Chloroform bei 25°C, hat, vormischt; (II) die resultierende Vormischung (C) mit einem aliphatischen Olefinpolymer, das mit einer elektrophilen Gruppe oder einer Acylgruppe funktionalisiert ist, mischt, und (III) die so geformten Produkte mit (D) einem Härter mischt.

2. Zusammensetzung nach Anspruch 1, dadurch gekennzeichnet, daß der Polyphenylenether Poly(2,6-dimethyl-1,4-phenylenether) ist.

3. Zusammensetzung nach Anspruch 2, dadurch gekennzeichnet, daß die Komponente A mit einer Acylgruppe und Komponente C mit einer elektrophilen Gruppe funktionalisiert ist.

4. Zusammensetzung nach Anspruch 3, dadurch gekennzeichnet, daß die Komponente C ein funktionalisiertes EPDM-Copolymer ist.

5. Zusammensetzung nach Anspruch 4, dadurch gekennzeichnet, daß die elektrophile Gruppe eine Epoxygruppe ist.

6. Zusammensetzung nach Anspruch 5, dadurch gekennzeichnet, daß die Komponente C ein Glycidylmethacrylat-gepfropftes EPDM-Copolymer ist.

7. Zusammensetzung nach Anspruch 3, dadurch gekennzeichnet, daß die Komponente A das Reaktionsprodukt aus Polyphenylenether und Trimelithanhydridsäurechlorid ist.

8. Zusammensetzung nach Anspruch 7, dadurch gekennzeichnet, daß die Komponente C ein Glycidylmethacrylat-gepfropftes EPDM-Copolymer ist.

9. Zusammensetzung nach Anspruch 8, dadurch gekennzeichnet, daß die Komponente D in einer Menge von zwischen 0,1 bis 10,0 Teilen pro 100 Teile der Harzkomponenten eingesetzt wird.

10. Zusammensetzung nach Anspruch 9, dadurch gekennzeichnet, daß die Komponente D Hexamethylendiaminmonocarbaminsäure ist.

## Revendications

1. Composition préparée en (I) mélangeant au préalable (A) un poly(phénylène éther) fonctionnalisé par un groupe électrophile ou par un groupe acyle, présentant une viscosité intrinsèque supérieure à 0,35 dl/g, mesurée dans le chloroforme à 25 °C; et (B) un poly(phénylène éther) non-fonctionnalisé présentant une viscosité intrinsèque de (),15 à 0,35 dl/g, mesurée dans le chloroforme à 25 °C; (II) mélangeant le prémélange résultant avec (C) un polymère d'oléfine aliphatique fonctionnalisé par un groupe électrophile ou par un groupe acyle, et (III) mélangeant le produit ainsi formé avec (D) un agent de durcissement.

2. Composition selon la revendication 1, dans laquelle le poly(phénylène éther) est un poly(2,6-diméthyl-1,4-phénylène éther).

3. Composition selon la revendication 2, dans laquelle le composant A est fonctionnalisé par un groupe acyle et le composant C est fonctionnalisé par un groupe électrophile.

4. Composition selon la revendication 3, dans laquelle le composant C est un copolymère EPDM fonctionnalisé.

5. Composition selon la revendication 4, dans laquelle le groupe électrophile est un groupe époxy.

6. Composition selon la revendication 5, dans laquelle le composant C est un copolymère EPDM sur lequel on a greffé du méthacrylate de glycidyle.

7. Composition selon la revendication 3, dans laquelle le composant A est le produit réactionnel d'un poly(phénylène éther) et du chlorure d'acide de l'anhydride trimellitique.

8. Composition selon la revendication 7, dans laquelle le composant C est un copolymère EPDM sur lequel on a greffé du méthacrylate de glycidyle.

9. Composition selon la revendication 8, dans laquelle on utilise le composant D en une quantité allant d'environ 0,1 à 10,0 parties pour 100 parties de composants résineux.

10. Composition selon la revendication 9, dans laquelle le composant D est l'acide hexaméthylènediaminemonocarbamique.
